# EUROPÄISCHE PATENTSCHRIFT

(11) **EP 2 106 506 B1**
(45) Veröffentlichungstag und Bekanntmachung des Hinweises auf die Patenterteilung: **06.09.2017**
(21) Anmeldenummer: 07725156.9
(22) Anmeldetag: 12.05.2007
(51) Int. Cl.: F15B 13/08

(54) **VENTILGERÄT MIT OPTO-ELEKTRISCHER ZUSTANDSANZEIGEEINRICHTUNG**
VALVE ASSEMBLY HAVING AN OPTO-ELECTRIC STATE DISPLAY DEVICE
APPAREIL À SOUPAPE DOTÉ D'UN DISPOSITIF OPTO-ÉLECTRIQUE D'AFFICHAGE D'ÉTAT

(43) Veröffentlichungstag der Anmeldung: 07.10.2009
(73) Patentinhaber: FESTO AG & Co. KG, 73734 Esslingen (DE)
(72) Erfinder: BOGDANOWICZ, Gregorz, 73760 Ostfildern (DE)
(74) Vertreter: Patentanwälte Magenbauer & Kollegen Partnerschaft mbB
(86) Internationale Anmeldenummer: PCT/EP2007/004236
(87) Internationale Veröffentlichungsnummer: WO 2008/138373

(56) Entgegenhaltungen:
- EP-A- 0 606 048
- EP-A- 0 809 058
- DE-A1- 10 326 110
- DE-U1- 20 004 747
- DE-U1- 20 105 982

## Beschreibung

Die Erfindung betrifft ein Ventilgerät zur Steuerung von Fluidströmen gemäß den Oberbegriffen der Patentansprüche 1 und 3.

Der Anmelderin ist ein nicht druckschriftlich belegbares Ventilgerät bekannt, das eine auf einem Ventilträger montierte Ventileinheit aufweist, an der eine elektrische Schnittstelleneinrichtung angeordnet ist, die mit einem zu einer internen elektrischen Signalübertragungseinrichtung des Ventilträgers gehörenden Einspeiseteil elektrisch verbunden ist. Über das Einspeiseteil werden der elektrischen Antriebseinrichtung der Ventileinheit die erforderlichen elektrischen Betätigungssignale zugeführt. Die Ventileinheit kann vom Ventilträger abgenommen werden, wobei die elektrische Schnittstelleneinrichtung von dem am Ventilträger verbleibenden Einspeiseteil getrennt wird. Innerhalb der Ventileinheit befindet sich eine opto-elektrische Zustandsanzeigeeinrichtung mit einer in Abhängigkeit vom Betriebszustand der elektrischen Antriebseinrichtung Lichtsignale aussendenden Lichtquelle und einem diese Lichtsignale zu einem gut einsehbar an der Außenseite der Ventileinheit liegenden Anzeigebereich leitenden Lichtleiter. Lichtquelle und Lichtleiter sind Bestandteile der Ventileinheit und verbleiben daran, auch wenn die Verbindung zu dem Einspeiseteil gelöst wird.

Aus der DE 201 05 982 U1 ist eine Ventilanordnung bekannt, bei der stirnseitig an einer Mehrfachanordnung von Ventileinheiten ein eigenständiges Anzeigemodul angeordnet ist. Dieses beinhaltet eine mit den einzelnen Ventileinheiten elektrisch verbundene Platine, auf der den Ventileinheiten zugeordnete Leuchtmittel sitzen, deren Lichtsignale über fest in der Wandung des Anzeigemoduls angeordnete Lichtleiter zu einem Anzeigefeld geleitet werden.

Aus der EP 0 606 048 A1 ist eine Ventilanordnung bekannt, bei der ein fluidisches Wegeventil auf einer Grundplatte sitzt, die eine die elektrischen Betätigungssignale liefernde Leiterplatte beinhaltet. Die Leiterplatte trägt eine Leuchtdiode, die durch eine Aussparung in der Wandung des Ventilträgers hindurchgreift, um die Lichtsignale von außen her sichtbar zu machen. Ein spezieller Lichtleiter ist hier nicht vorhanden.

Aus der EP 0 809 058 A ist ein Ventilgerät bekannt, dessen Aufbau den Oberbegriffsmerkmalen der Patentansprüche 1 und 3 entspricht und das über eine auf einem Ventilträger montierte Ventileinheit verfügt, an der über mehrere Anschlusselemente eine Leiterplatte angebracht ist, die mit Leuchtdioden ausgestattet ist, die im Bereich eines lichtdurchlässigen Fensters einer abnehmbaren Abdeckung angeordnet sind.

Es ist eine Aufgabe der vorliegenden Erfindung, ein Ventilgerät der eingangs genannten Art zu schaffen, das bei flexiblem Aufbau kompakte Abmessungen ermöglicht.

Zur Lösung dieser Aufgabe ist in Verbindung mit den Merkmalen des Oberbegriffes des Patentanspruches 1 vorgesehen, dass die mindestens eine Ventileinheit als eigenständige Komponente auf einem die interne elektrische Signalübertragungseinrichtung enthaltenden und zum Ventilgerät gehörenden Ventilträger montiert ist, auf dem mehrere Ventileinheiten Seite an Seite nebeneinander montiert sind, denen jeweils mindestens eine Zustandsanzeigeeinrichtung zugeordnet ist.

Ferner ist zur alternativen Lösung dieser Aufgabe in Verbindung mit den Merkmalen des Oberbegriffes des Patentanspruches 3 vorgesehen, dass das Einspeiseteil ein an einem Kabel angeordneter individueller Ventilanschlussstecker ist.

Somit ist die durch elektrische Signale aktivierbare Lichtquelle unabhängig von der Ventileinheit ausgebildet und befindet sich an dem lösbar mit der Ventileinheit verbindbaren Einspeiseteil, über das der elektrischen Antriebseinrichtung ihre elektrischen Betätigungssignale zugeführt werden. Eine Trennung von Ventileinheit und Einspeiseteil bewirkt somit unmittelbar eine Trennung der Lichtquelle von dem Lichteintrittsbereich des an der Ventileinheit angeordneten Lichtleiters. Durch die Verlagerung der Lichtquelle an das Einspeiseteil wird dessen Bauvolumen nicht oder nur unwesentlich vergrößert, so dass kaum mehr Platz beansprucht wird als bei einem ohne Lichtquelle ausgebildeten Einspeiseteil. Es erübrigt sich ein spezieller Träger für die Lichtquelle, weil hierzu das Einspeiseteil unmittelbar verwendet werden kann. Indem die Lichtquelle an der Ventileinheit entfällt, kann diese relativ kompakt ausgeführt werden. Neben der Lichtquelle entfällt an der Ventileinheit auch ein zum Beispiel als Leiterplatte ausgeführter Träger für die Lichtquelle, was die Herstellungskosten reduziert. Der an der Ventileinheit verbleibende Lichtleiter lässt sich ohne große gestalterische Zwänge relativ einfach in einer Weise ausbilden, dass sein Lichteintrittsbereich an der Lichtquelle zu liegen kommt, wenn das Einspeiseteil an die elektrische Schnittstelleneinrichtung angeschlossen ist. An der Ventileinheit entfällt eine Trägerplatine für die Lichtquelle, die den Gestaltungsspielraum für den Lichtleiter und auch für die gesamte Ventileinheit einschränken würde.

Gemäß Patentanspruch 1 ist das Einspeiseteil Bestandteil einer sich im Innern des Ventilgerätes erstreckenden internen elektrischen Signalübertragungseinrichtung. Besonders zweckmäßig ist in diesem Zusammenhang eine Ausstattung des Einspeiseteils mit einer elektrische Leiter aufweisenden Platine, die die Lichtquelle trägt. Das Einspeiseteil ist in einem Ventilträger angeordnet, an dem die Ventileinheit als eigenständige Komponente montiert ist. Mehrere Ventileinheiten sind gemeinsam auf ein und demselben Ventilträger installiert und erhalten ihre Betätigungssignale über die in dem Ventilträger verlaufende elektrische Signalübertragungseinrichtung.

Gemäß Patentanspruch 3 ist das Einspeiseteil als individueller Ventilanschlussstecker ausgebildet, der mit einem Kabel verbunden ist und an die elektrische Schnittstelleneinrichtung anschließbar ist. Die elektrische Schnittstelleneinrichtung ist dabei selbst dann für die Verbindung mit dem Ventilanschlussstecker zugänglich, wenn die Ventileinheit auf einem Ventilträger installiert ist. Dieser braucht in diesem Fall keine interne Signalübertragungseinrichtung aufzuweisen.

Vorteilhafte Weiterbildungen der Erfindung gehen aus den Unteransprüche hervor.

Das Einspeiseteil ist zweckmäßigerweise ausgebildet, um im Rahmen einer lösbaren Steckverbindung mit der elektrischen Schnittstelleneinrichtung kontaktiert werden zu können.

Bei der Ventileinheit handelt es sich zweckmäßigerweise um ein vorgesteuertes Mehrwegeventil, bei dem die elektrische Antriebseinrichtung Bestandteil mindestens eines elektrisch betätigbaren Vorsteuerventils ist. Dieses kann insbesondere als Magnetventil oder Piezoventil ausgeführt sein.

Als Lichtquelle bietet sich insbesondere eine kostengünstige Leuchtdiode (LED) an, aber auch jede sonstige durch elektrische Signale aktiverbare Lichtquelle.

Nachfolgend wird die Erfindung anhand der beiliegenden Zeichnung näher erläutert. In dieser zeigen:
- Figur 1: eine mögliche erste Bauform des erfindungsgemäßen Ventilgerätes in einer perspektivischen Darstellung,
- Figur 2: das Ventilgerät aus Figur 1 im Schnitt gemäß Schnittlinie II-II,
- Figur 3: eine weitere zweckmäßige Ausführungsform des erfindungsgemäßen Ventilgerätes, und
- Figur 4: eine einzelne Ventileinheit des Ventilgerätes aus Figur 3 in einer Seitenansicht, wobei das Einspeiseteil zum einen im angeschlossenen Zustand abgebildet und zum anderen, strichpunktiert, im von der elektrischen Schnittstelleneinrichtung der Ventileinheit gelösten Zustand gezeigt ist.

Die beiden Bauformen von Ventilgeräten 1a, 1b verfügen jeweils über mehrere Ventileinheiten 2a, 2b, die gemeinsam auf einem zum Beispiel plattenförmig ausgebildeten Ventilträger 3a, 3b in lösbarer Weise montiert sind. Die Ventileinheiten 2a, 2b sind dabei in Richtung einer Hauptachse 4 des Ventilgerätes 1a, 1b aufeinanderfolgend angeordnet. Der Ventilträger 3a, 3b kann auch modular aufgebaut sein.

Die einzelnen Ventileinheiten 2a, 2b sind, mit einer an ihrer Unterseite vorhandenen Grundfläche 5 voraus, an eine bevorzugt ebene Bestückungsfläche 6 des Ventilträgers 3a, 3b angesetzt und mittels Schrauben oder sonstigen Befestigungsmitteln lösbar fixiert.

Im Innern jeder Ventileinheit 2a, 2b verlaufen mehrere Ventilkanäle 7, die zu der Grundfläche 5 ausmünden. Außerdem beinhaltet jede Ventileinheit 2a, 2b mindestens ein in unterschiedlichen Schaltstellungen positionierbares Ventilglied 8, das die Fluidströmung durch die Ventilkanäle 7 steuern kann, indem es diese Ventilkanäle 7 in unterschiedlichem Muster miteinander verbindet.

Für die Aktivierung des mindestens einen Ventilgliedes 8 umfasst die Ventileinheit 2a, 2b eine elektrische Antriebseinrichtung 12, die bei beiden Ausführungsbeispielen aus mindestens einer Elektromagneteinrichtung 13 besteht.

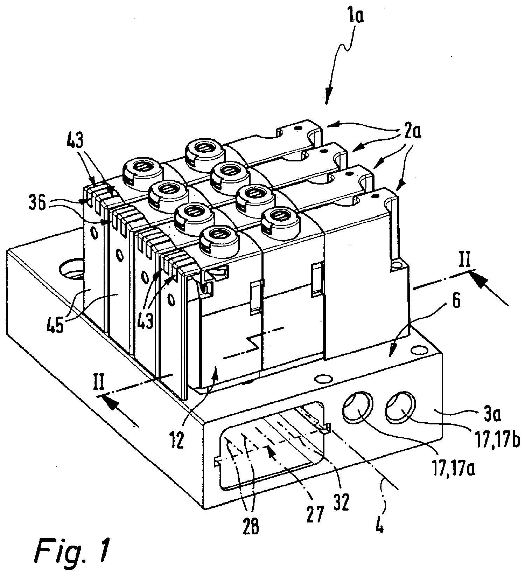

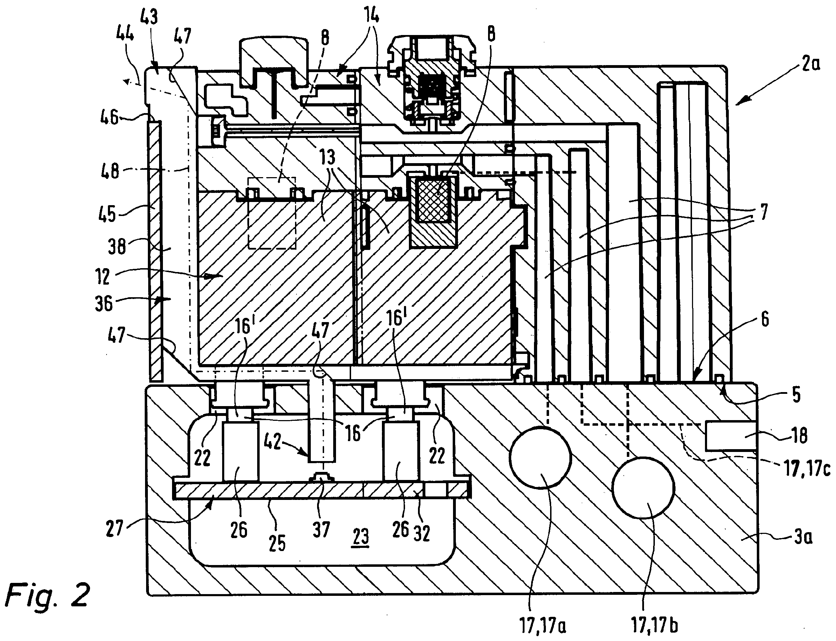

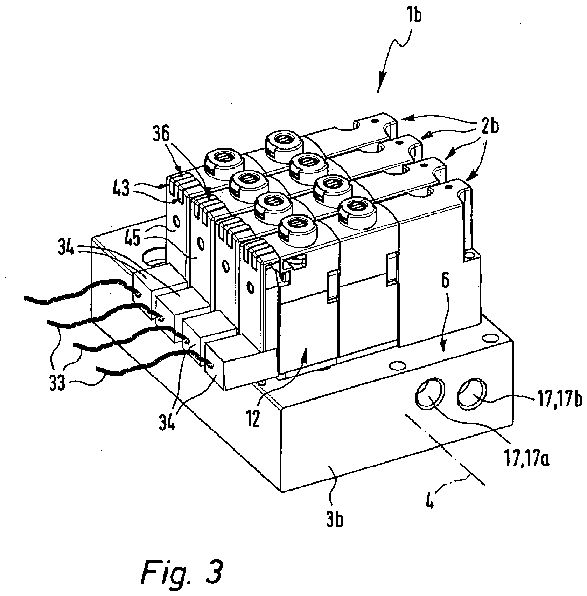

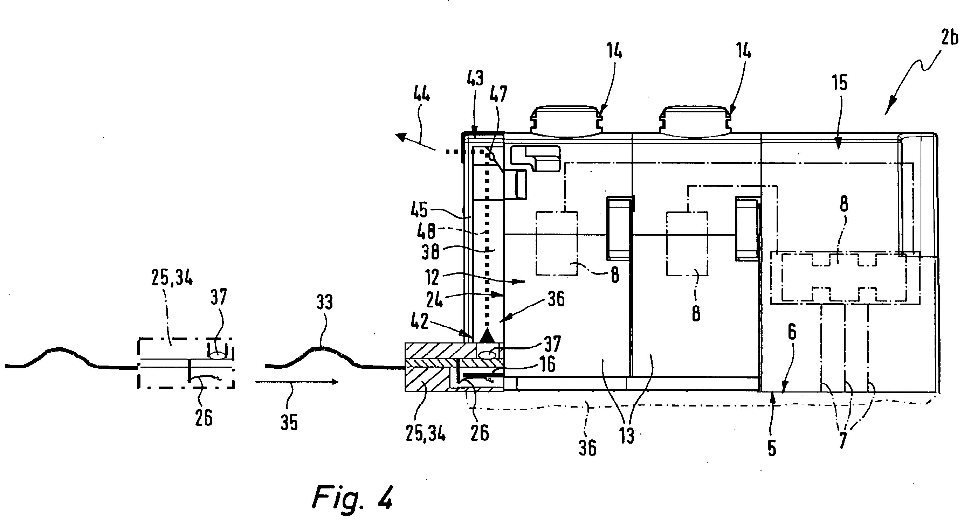

Bei beiden Ausführungsbeispielen beinhaltet die Ventileinheit 2a, 2b zwei elektrisch betätigbare Steuerventile 14, die je eine der Elektromagneteinrichtungen 13 und ein durch die Elektromagneteinrichtung 13 bewegbares Ventilglied 8 beinhalten. Während jedoch bei der Ventileinheit 2a der Figuren 1 und 2 die beiden Steuerventile 14 die Fluidströmung durch die Ventilkanäle 7 jeweils unmittelbar steuern, sind die Steuerventile 14 bei der Ventileinheit 2b der Figuren 3 und 4 als Vorsteuerventile ausgeführt. Sie dienen hier zur Betätigung des Ventilgliedes 8 eines Hauptventils 15 der Ventileinheit 2a, 2b, das die Fluidströmung durch die Ventilkanäle 7 steuert. Damit wird deutlich, dass die Erfindung sowohl bei vorgesteuerten Ventileinheiten als auch bei direkt gesteuerten Ventileinheiten eingesetzt werden kann.

Handelt es sich bei den Steuerventilen 14 nicht um Magnetventile, sondern beispielsweise um Piezoventile oder elektrostatisch betätigbare Ventile, sind die elektrischen Antriebseinrichtungen 12 selbstverständlich nach einem daran angepassten Funktionsprinzip ausgebildet.

Zur Einspeisung der für den Betrieb der elektrischen Antriebseinrichtung 12 erforderlichen elektrischen Betätigungssignale ist jede Ventileinheit 2a, 2b mit einer elektrischen Schnittstelleneinrichtung 16 ausgestattet. Beispielhaft besteht diese aus einem oder mehreren Steckkontakten, insbesondere in Gestalt von Kontaktstiften oder Kontaktfahnen.

Der Ventilträger 3a, 3b ist von mehreren Ventilträgerkanälen 17 durchsetzt, die so an der Bestückungsfläche 6 ausmünden, dass eine fluidische Verbindung mit den Ventilkanälen 7 der daran montierten Ventileinheiten 2a, 2b vorliegt. Die Ventilträgerkanäle 17 sind bei beiden Ausführungsbeispielen identisch ausgebildet und enthalten je mindestens einen mit einer externen Druckquelle verbindbaren Speisekanal 17a und mindestens einen mit einer Drucksenke, insbesondere der Atmosphäre verbindbaren Abführkanal 17b. Diese beiden Kanäle 17a, 17b münden zu jedem mit einer Ventileinheit 2a, 2b bestückten Flächenabschnitt der Bestückungsfläche 6a aus und kommunizieren auf diese Weise mit jeder Ventileinheit 2a, 2b. Darüber hinaus münden zu jedem dieser Flächenabschnitte ein oder mehrere individuelle Arbeitskanäle 17c der Ventilträgerkanäle 17, die andernends über eine Anschlussöffnung 18 zu einer Seitenfläche des Ventilträgers 3a, 3b ausmünden und dort den Anschluss von Fluidleitungen ermöglichen, die zu anzusteuernden Verbrauchern führen, beispielsweise zu fluidisch betätigbaren Antriebsaggregaten.

Der bisher geschilderte Aufbau der Ventilgeräte 1a, 1b ist auch dann möglich, wenn die Baulänge in Richtung der Hauptachse 4 relativ kurz ist und das Ventilgerät 1a, 1b über nur eine Ventileinheit 2a, 2b verfügt.

Die beiden Ventileinheiten 2a, 2b unterscheiden sich in der Anordnung und Ausgestaltung ihrer elektrischen Schnittstelleneinrichtung 16. Bei der Ventileinheit 2a gemäß Figuren 1 und 2 befindet sie sich an der Grundfläche 5 und greift im an dem Ventilträger 3a montierten Zustand durch eine oder mehrere Wanddurchbrechungen 22 des Ventilträgers 3a hindurch in einen Aufnahmeraum 23 ein, der im Innern des Ventilträgers 3a ausgebildet ist. Exemplarisch beinhaltet die elektrische Schnittstelleneinrichtung 16 hier zwei elektrische Schnittstelleneinheiten 16', die in je eine eigens zugeordnete Wanddurchbrechung 22 eintauchen.

Bei am Ventilträger 3a montierter Ventileinheit 2a ist die elektrische Schnittstelleneinrichtung 16 bei dem Ventilgerät 1a folglich zur Umgebung hin unsichtbar abgeschirmt.

Anders bei dem Ventilgerät 1b der Figuren 3 und 4. Hier befindet sich die elektrische Schnittstelleneinrichtung 16 abseits der Grundfläche 5 und insbesondere an einer rechtwinkelig zu der Grundfläche 5 orientierten Stirnfläche 24 der Ventileinheit 2b. Diese Schnittstelleneinrichtung 16 bleibt somit für elektrische Anschlussmaßnahmen auch dann zugänglich, wenn die Ventileinheit 2b am Ventilträger 3b montiert ist. Sie wird vom Ventilträger 3b nicht verdeckt.

Bei dem Ventilgerät 1b wird somit der Aufnahmeraum 23 für die elektrische Versorgung nicht benötigt und kann, wie aus Figur 3 ersichtlich, entfallen. Selbstverständlich kann er, auch wenn er nicht genutzt wird, aus Gründen einer einheitlichen Gestaltung der Ventilträger 3a, 3b auch bei dieser Bauform beibehalten werden.

Jeder Ventileinheit 2a, 2b werden die elektrischen Betätigungssignale über ein Einspeiseteil 25 zugeführt, das lösbar an die elektrische Schnittstelleneinrichtung 16 anschließbar ist. Die Figuren 2 und 4 zeigen in durchgezogenen Linien den angeschlossenen Zustand. Ergänzend ist in Figur 4 strichpunktiert das Einspeiseteil 25 vor dem Herstellen der elektrischen Verbindung gezeigt.

Zweckmäßigerweise erfolgt die elektrische Verbindung zwischen Einspeiseteil 25 und elektrischer Schnittstelleneinrichtung 16 durch eine lösbare Steckverbindung. Hierzu verfügt bei den Ausführungsbeispielen jedes Einspeiseteil 25 über eine mit der elektrischen Schnittstelleneinrichtung 16 zusammenpassende elektrische Gegenschnittstelleneinrichtung 26. Die Schnittstelleneinrichtung 16 und die Gegenschnittstelleneinrichtung 26 definieren eine elektrische Steckverbindungseinrichtung. Bei Bedarf können allerdings auch andere Verbindungsarten vorgesehen sein.

Die elektrische Schnittstelleneinrichtung 16 ist zweckmäßigerweise im Bereich der elektrischen Antriebseinrichtung 12 an der Ventileinheit 2a, 2b angeordnet. Auf diese Weise werden nur kurze elektrische Leiter benötigt.

Bei dem Ventilgerät 1a der Figuren 1 und 2 ist das Einspeiseteil 25 Bestandteil einer sich in dem Aufnahmeraum 23 und mithin im Innern des Ventilgerätes 1a erstreckenden internen elektrischen Signalübertragungseinrichtung 27. Der Aufnahmeraum 23 kann hier kanalförmig ausgebildet sein, wobei sich die Signalübertragungseinrichtung 27 in seiner Längsrichtung erstreckt und auf axialer Höhe der einzelnen Ventileinheiten 2a je ein Einspeiseteil 25 aufweist.

Insbesondere verfügt das Einspeiseteil 25 über eine mit elektrischen Leitern 28 versehene Platine 32, die die elektrische Gegenschnittstelleneinrichtung 26 trägt. Hierbei kann jeder Ventileinheit 2a eine eigene Platine 32 zugeordnet sein, wobei dann sämtliche Platinen 32 zu einer modular aufgebauten Gesamtplatine zusammensetzbar sind. Es ist aber auch möglich, mehreren und insbesondere sämtlichen Ventileinheiten 2a gemeinsam eine einzige Platine 32 zuzuordnen, die dann sämtliche elektrischen Schnittstelleneinrichtungen 16 trägt. Hier ist dann mit anderen Worten ein einziges Einspeiseteil 25 vorhanden, das die Zufuhr der Betätigungssignale zu mehreren oder sämtlichen Ventileinheiten 2a übernimmt.

Unabhängig von seiner Ausgestaltung ist das Einspeiseteil 25 in diesem Fall so im Innern des Aufnahmeraumes 23 fixiert, dass es mit dem Ventilträger 3a eine Baueinheit bildet. Die elektrischen Gegenschnittstelleneinrichtungen 26 sind hierbei so ausgerichtet, dass sie gegenüber den Wanddurchbrechungen 22 zu liegen kommen. Bei der Montage und Demontage einer Ventileinheit 2a an dem oder von dem Ventilträger 3a werden somit die elektrischen Verbindungen zwischen der elektrischen Schnittstelleneinrichtung 16 und der elektrischen Gegenschnittstelleneinrichtung 26 selbsttätig hergestellt oder getrennt. Bei vom Ventilträger 3a abgenommener Ventileinheit 2a verbleibt das Einspeiseteil 25 am Ventilträger 3a.

Bei dem Ventilgerät 1b gemäß Figuren 3 und 4 ist das Einspeiseteil 25 als an einem Kabel 33 angeordneter individueller Ventilanschlussstecker 34 ausgebildet. Er kann bei am Ventilträger 3b montierter Ventileinheit 2b nach Bedarf an die elektrische Schnittstelleneinrichtung 16 gemäß Pfeil 35 angesteckt oder abgezogen werden. Diese Lösung verwendet man überwiegend dann, wenn einzelne Ventileinheiten 2b unabhängig voneinander individuell elektrisch kontaktiert werden sollen. Das Herstellen und Lösen der elektrischen Verbindung erfordert hier zusätzlich zu dem Vorgang des Anbringens oder Entfernens der Ventileinheit 2b an den oder von dem Ventilträger 3b eine zusätzliche Handhabung, während dies bei dem Ventilgerät 1a einheitlich abläuft.

Die elektrischen Betätigungssignale für die einzelnen Ventileinheiten 2a, 2b werden regelmäßig von einer nicht weiter dargestellten externen elektronischen Steuereinrichtung generiert und von dieser dann zu den Einspeiseteilen 25 geleitet. Bei dem Ventilgerät 1b werden hierzu die einzelnen Kabel 33 verwendet. Bei dem Ventilgerät 1a greift man regelmäßig auf eine nicht weiter dargestellte zentrale Schnittstelleneinrichtung zurück, die an geeigneter Stelle platziert ist und mit den elektrischen Leitern 28 in Verbindung steht.

Es wäre prinzipiell möglich, jede Ventileinheit anstelle als bezüglich einem Ventilträger eigenständige Komponente in Baueinheit mit einem Fluidführungsabschnitt auszubilden, der den Ventilträgerkanälen 17 entsprechende Fluidkanäle beinhaltet. Eine solche Bauform ist beispielsweise in der DE 201 05 982 U1 beschrieben.

Zur Visualisierung mindestens eines ihrer Betriebszustände ist jeder Ventileinheit 2a, 2b mindestens eine opto-elektrische Zustandsanzeigeeinrichtung 36 zugeordnet. Beim Ausführungsbeispiel sind pro Ventileinheit 2a, 2b jeweils zwei solcher Zustandsanzeigeeinrichtungen 26 vorhanden, die jeweils mit einem der beiden elektrisch betätigbaren Steuerventile 14 kooperieren. Jede Zustandsanzeigeeinrichtung 36 dient dazu, mindestens eine Schaltstellung des zugeordneten Steuerventils 14 durch Ausgabe von elektrisch hervorgerufenen Lichtsignalen optisch zu signalisieren.

Zu jeder Zustandsanzeigeeinrichtung 36 gehört eine durch elektrische Signale aktivierbare Lichtquelle 37, bei der es sich vorzugsweise um eine Leuchtdiode (LED) handelt, die aber auch von jedem anderen, Licht emittierenden Leuchtmittel gebildet sein kann. Es ist insbesondere eine dahingehende elektrische Verschaltung vorgesehen, dass die einem Steuerventil 14 zugeordnete Lichtquelle 37 stets dann durch Aufleuchten Lichtsignale aussendet, wenn das Steuerventil 14 elektrisch aktiviert ist. Im deaktivierten Zustand bleibt die Lichtquelle 27 ausgeschaltet oder es kann auch eine andere Lichtquelle aktiviert werden. Es ist ohne weiteres möglich, jedem Steuerventil 14 mehr als nur eine Lichtquelle 37 zuzuordnen. Insbesondere besteht auch die Möglichkeit, für jede Ventileinheit 2a, 2b eine beliebige Anzahl von Lichtquellen 37 vorzusehen, die für unterschiedlichste Diagnoseaufgaben bestimmt sind.

Allen Lichtquellen 37 ist gemeinsam, dass sie separat bezüglich der zugeordneten Ventileinheit 2a, 2b ausgebildet sind. Die Lichtquelle 37 ist also nicht Bestandteil der Ventileinheit 2a, 2b, sondern unabhängig von dieser. Genauer gesagt ist die Lichtquelle 37 ein Bestandteil des jeweils zugeordneten Einspeiseteils 25, so dass sie von der Ventileinheit 2a, 2b entfernt wird, wenn die elektrische Verbindung zwischen einer Ventileinheit 2a, 2b und dem zugeordneten Einspeiseteil 25 getrennt wird.

Bei dem Ventilgerät 1a sitzt die mindestens eine Lichtquelle 37 vorzugsweise an der Platine 32. Bei dem Ventilgerät 1b der Figuren 3 und 4 ist sie an dem Ventilanschlussstecker 34 angeordnet.

Wenn die elektrische Verbindung zwischen der Schnittstelleneinrichtung 16 und der Gegenschnittstelleneinrichtung 26 hergestellt ist, ist die am Einspeiseteil 25 angeordnete Lichtquelle 37 durch Bestandteile des Ventilgerätes 1a, 1b zur unmittelbaren Umgebung hin lichtundurchlässig abgeschirmt, so dass die Lichtsignale für eine ausstehende Person nicht unmittelbar sichtbar sind. Zur Sichtbarmachung der Lichtsignale beinhaltet jede Zustandsanzeigeeinrichtung 36 einen auch als Lichtwellenleiter bezeichenbaren Lichtleiter 38, der die Lichtsignale der Lichtquelle 37 ausgehend von einem bei der Lichtquelle 37 platzierten Lichteintrittsbereich 42 zu einem an der Außenseite der Ventileinheit 2a, 2b liegenden Anzeigebereich 43 leitet.

An dem Anzeigebereich 43 treten die Lichtstrahlen gemäß Pfeil 44 aus dem jeweiligen Lichtleiter 38 aus.

Der Lichtleiter 38 ist ein Bestandteil der Ventileinheit 2a, 2b. Wird die Ventileinheit 2a, 2b vom Einspeiseteil 25 getrennt, führt dies somit auch zu einer Trennung des an der Ventileinheit 2a, 2b angeordneten Lichtleiters 38 von der am Einspeiseteil 25 angeordneten Lichtquelle 37.

Beispielhaft sitzt der Lichtleiter 38 partiell verdeckt unter einer an der Ventileinheit 2a, 2b angebrachten lichtundurchlässigen Abdeckung 45. Letztere kann mit der Ventileinheit unter Fixierung des dazwischen angeordneten Lichtleiters 38 beispielsweise verschraubt sein. Eine Aussparung 46 gestattet den Durchtritt des Lichtleiters 38 an dem Anzeigebereich 43. Durch entsprechende Gestaltung des Lichtleiters 38 ist gewährleistet, dass sein Lichteintrittsbereich 42 derart in der Nähe der Lichtquelle 37 liegt, dass deren Lichtsignale direkt eintreten können. Reflexionsflächen 47 innerhalb des Lichtleiters 38 sorgen für den gewünschten Strahlengang 48 der Lichtsignale zu dem Anzeigebereich 43.

Wird die elektrische Verbindung zwischen der elektrischen Schnittstelleneinrichtung 16 und dem Einspeiseteil 25 hergestellt, gelangt die Lichtquelle 37 automatisch so zu dem Lichteintrittsbereich 42 des Lichtleiters 38, dass die gewünschte Lichtleitfunktion gegeben ist. Zusätzlich Handhabungsmaßnahmen zur gegenseitigen Positionierung dieser Komponenten sind nicht erforderlich.

Die Anbringung der Lichtquelle 37 an dem Einspeiseteil 25 erfordert für das Ventilgerät 1a, 1b insgesamt nicht mehr Platzbedarf als wenn die Lichtquelle 37 dort nicht vorhanden wäre. Im Gegenzug kann an der Ventileinheit 2a, 2b auf spezielle Maßnahmen zur Unterbringung einer Lichtquelle verzichtet werden. Lediglich der Lichtleiter 38 der Zustandsanzeigeeinrichtung 36 ist an der Ventileinheit 2a, 2b vorzusehen, wobei es sich um ein elektrisch inaktives Teil handelt, so dass für seinen Betrieb keinen elektrischen Leiter benötigt werden. Somit spart man sich an der Ventileinheit 2a, 2b elektrische Maßnahmen für die Zustandsanzeige und dementsprechend auch einen dafür erforderlichen Einbauraum.

Das Ventilgerät ist zum Betrieb mit beliebigen fluidischen Druckmedien geeignet, empfiehlt sich aber besonders für einen Einsatz mit Druckluft.

## Patentansprüche

1. Ventilgerät zur Steuerung von Fluidströmen, mit mindestens einer eine elektrische Antriebseinrichtung (12) aufweisenden Ventileinheit (2a, 2b), an der eine elektrische Schnittstelleneinrichtung (16) zur Einspeisung der für die Antriebseinrichtung (12) bestimmten elektrischen Betätigungssignale vorhanden ist, mit einem lösbar an diese elektrische Schnittstelleneinrichtung (16) anschließbaren oder angeschlossenen, die elektrischen Betätigungssignale zuführenden Einspeiseteil (25), das Bestandteil einer sich im Innern des Ventilgerätes (1a, 1b) erstreckenden internen elektrischen Signalübertragungseinrichtung (27) ist, und mit mindestens einer der Ventileinheit (2a, 2b) zugeordneten opto-elektrischen Zustandsanzeigeeinrichtung (36), die eine Lichtquelle (37) und einen als Bestandteil der Ventileinheit (2a, 2b) ausgeführten, die Lichtsignale der Lichtquelle (37) ausgehend von einem Lichteintrittsbereich (42) zu einem Anzeigebereich (43) an der Außenseite der Ventileinheit (2a, 2b) leitenden Lichtleiter (38) enthält, wobei die Lichtquelle (37) bezüglich der Ventileinheit (2a, 2b) separat angeordnet und als Bestandteil des Einspeiseteils (25) ausgeführt ist, wobei sie derart an dem Einspeiseteil (25) platziert ist, dass sie bei an die elektrische Schnittstelleneinrichtung (16) der Ventileinheit (2a, 2b) angeschlossenem Einspeiseteil (25) eine Position bei dem Lichteintrittsbereich (42) des Lichtleiters (38) einnimmt, **dadurch gekennzeichnet, dass** die mindestens eine Ventileinheit (2a, 2b) als eigenständige Komponente auf einem die interne elektrische Signalübertragungseinrichtung (27) enthaltenden und zum Ventilgerät gehörenden Ventilträger (3a, 3b) montiert ist, auf dem mehrere Ventileinheiten (2a, 2b) Seite an Seite nebeneinander montiert sind, denen jeweils mindestens eine Zustandsanzeigeeinrichtung (36) zugeordnet ist.

2. Ventilgerät nach Anspruch 1, **dadurch gekennzeichnet, dass** das Einspeiseteil (25) eine mit elektrischen Leitern (28) versehene und die Lichtquelle (37) tragende Platine aufweist.

3. Ventilgerät zur Steuerung von Fluidströmen, mit mindestens einer eine elektrische Antriebseinrichtung (12) aufweisenden Ventileinheit (2a, 2b), an der eine elektrische Schnittstelleneinrichtung (16) zur Einspeisung der für die Antriebseinrichtung (12) bestimmten elektrischen Betätigungssignale vorhanden ist, mit einem lösbar an diese elektrische Schnittstelleneinrichtung (16) anschließbaren oder angeschlossenen, die elektrischen Betätigungssignale zuführenden Einspeiseteil (25), und mit mindestens einer der Ventileinheit (2a, 2b) zugeordneten opto-elektrischen Zustandsanzeigeeinrichtung (36), die eine Lichtquelle (37) und einen als Bestandteil der Ventileinheit (2a, 2b) ausgeführten, die Lichtsignale der Lichtquelle (37) ausgehend von einem Lichteintrittsbereich (42) zu einem Anzeigebereich (43) an der Außenseite der Ventileinheit (2a, 2b) leitenden Lichtleiter (38) enthält, wobei die Lichtquelle (37) bezüglich der Ventileinheit (2a, 2b) separat angeordnet und als Bestandteil des Einspeiseteils (25) ausgeführt ist, wobei sie derart an dem Einspeiseteil (25) platziert ist, dass sie bei an die elektrische Schnittstelleneinrichtung (16) der Ventileinheit (2a, 2b) angeschlossenem Einspeiseteil (25) eine Position bei dem Lichteintrittsbereich (42) des Lichtleiters (38) einnimmt, **dadurch gekennzeichnet, dass** das Einspeiseteil (25) ein an einem Kabel (33) angeordneter individueller Ventilanschlussstecker (34) ist.

4. Ventilgerät nach Anspruch 3, **dadurch gekennzeichnet, dass** die mindestens eine Ventileinheit (2b) als eigenständige Komponente auf einem Ventilträger (3b) montiert ist, wobei die elektrische Schnittstelleneinrichtung (16) so an der Ventileinheit (2b) angeordnet ist, dass sie von dem Ventilträger (3b) nicht verdeckt wird und auch bei an dem Ventilträger (3b) montierter Ventileinheit (2b) für das Anschließen und Entfernen des Ventilanschlusssteckers (34) zugänglich bleibt.

5. Ventilgerät nach Anspruch 3 oder 4, **gekennzeichnet durch** einen Ventilträger (3a, 3b), auf dem mehrere Ventileinheiten (2a, 2b) Seite an Seite nebeneinander montiert sind, denen jeweils mindestens eine Zustandsanzeigeeinrichtung (36) zugeordnet ist.

6. Ventilgerät nach einem der Ansprüche 1 bis 5, **dadurch gekennzeichnet, dass** das Einspeiseteil (25) zur lösbaren Steckverbindung mit der elektrischen Schnittstelleneinrichtung (16) ausgebildet ist.

7. Ventilgerät nach einem der Ansprüche 1 bis 6, **dadurch gekennzeichnet, dass** die elektrische Schnittstelleneinrichtung (16) an der elektrischen Antriebseinrichtung (12) der Ventileinheit (2a, 2b) angeordnet ist.

8. Ventilgerät nach einem der Ansprüche 1 bis 7, **dadurch gekennzeichnet, dass** die elektrische Antriebseinrichtung (12) Bestandteil mindestens eines elektrisch betätigbaren Vorsteuerventils der Ventileinheit (2a, 2b) ist.

9. Ventilgerät nach einem Ansprüche 1 bis 8, **dadurch gekennzeichnet, dass** die Lichtquelle (37) von einer Leuchtdiode gebildet ist.

## Claims

1. Valve apparatus for controlling fluid flows, having at least one valve unit (2a, 2b) which has an electrical drive device (12), and on which valve unit (2a, 2b) there is an electrical interface device (16) for feeding in the electrical actuating signals intended for the drive device (12), having a feeding-in part (25) detachably connectable or connected to this electrical interface device (16) and supplying the electrical actuating signals, this feeding-in part (25) being a constituent part of an internal electrical signal transmission device (27) which extends inside the valve apparatus (1a, 1b), and having at least one opto-electric state display device (36) which is assigned to the valve unit (2a, 2b) and which contains a light source (37) and an optical waveguide (38) which is designed as a constituent part of the valve unit (2a, 2b) and conducts the light signals of the light source (37) starting from a light admission area (42) to a display area (43) on the outside of the valve unit (2a, 2b), wherein the light source (37) is arranged separately with respect to the valve unit (2a, 2b) and is designed as a constituent part of the feeding-in part (25), wherein it is placed on the feeding-in part (25) in such a way that it occupies a position by the light admission area (42) of the optical waveguide (38) when the feeding-in part (25) is connected to the electrical interface device (16) of the valve unit (2a, 2b), **characterised in that** the at least one valve unit (2a, 2b) is mounted as a discrete component on a valve support (3a, 3b) which contains the internal electrical signal transmission device (27) and is part of the valve apparatus, on which valve support (3a, 3b) a plurality of valve units (2a, 2b) are mounted side by side next to one another, to which in each case at least one state display device (36) is assigned.

2. Valve apparatus according to claim 1, **characterised in that** the feeding-in part (25) has a circuit board provided with electrical conductors (28) and carrying the light source (37).

3. Valve apparatus for controlling fluid flows, having at least one valve unit (2a, 2b) which has an electrical drive device (12), and on which valve unit (2a, 2b) there is an electrical interface device (16) for feeding in the electrical actuating signals intended for the drive device (12), having a feeding-in part (25) detachably connectable or connected to this electrical interface device (16) and supplying the electrical actuating signals, and having at least one opto-electric state display device (36) which is assigned to the valve unit (2a, 2b) and which contains a light source (37) and an optical waveguide (38) which is designed as a constituent part of the valve unit (2a, 2b) and conducts the light signals of the light source (37) starting from a light admission area (42) to a display area (43) on the outside of the valve unit (2a, 2b), wherein the light source (37) is arranged separately with respect to the valve unit (2a, 2b) and is designed as a constituent part of the feeding-in part (25), wherein it is placed on the feeding-in part (25) in such a way that it occupies a position by the light admission area (42) of the optical waveguide (38) when the feeding-in part (25) is connected to the electrical interface device (16) of the valve unit (2a, 2b), **characterised in that** the feeding-in part (25) is an individual valve connector plug (34) arranged on a cable (33).

4. Valve apparatus according to claim 3, **characterised in that** the at least one valve unit (2b) is mounted as a discrete component on a valve support (3b), wherein the electrical interface device (16) is arranged on the valve unit (2b) such that it is not covered by the valve support (3b) and also remains accessible for connecting and disconnecting the valve connector plug (34) when the valve unit (2b) is mounted on the valve support (3b).

5. Valve apparatus according to claim 3 or 4, **characterised by** a valve support (3a, 3b), on which a plurality of valve units (2a, 2b) are mounted side by side next to one another, to which in each case at least one state display device (36) is assigned.

6. Valve apparatus according to any one of claims 1 to 5, **characterised in that** the feeding-in part (25) is designed for detachable plug-in connection to the electrical interface device (16).

7. Valve apparatus according to any one of claims 1 to 6, **characterised in that** the electrical interface device (16) is arranged on the electrical drive device (12) of the valve unit (2a, 2b).

8. Valve apparatus according to any one of claims 1 to 7, **characterised in that** the electrical drive device (12) is a constituent part of at least one electrically actuatable pilot valve of the valve unit (2a, 2b).

9. Valve apparatus according to any one of claims 1 to 8, **characterised in that** the light source (37) is formed by a light-emitting diode.

## Revendications

1. Appareil à soupape pour la commande de courants fluides, avec au moins une unité de soupape (2a, 2b) présentant un dispositif d'entraînement (12) électrique, sur laquelle un dispositif d'interface (16) électrique est présent pour l'injection des signaux d'actionnement électriques destinés au dispositif d'entraînement (12), avec une partie d'injection (25) pouvant être raccordée ou raccordée de manière détachable à ce dispositif d'interface (16) électrique, acheminant les signaux d'actionnement électriques, qui est un élément d'un dispositif de transmission de signal (27) électrique interne s'étendant à l'intérieur de l'appareil à soupape (1a, 1b), et avec au moins un dispositif d'affichage d'état (36) optoélectrique associé à l'unité de soupape (2a, 2b) qui contient une source de lumière (37) et un conducteur lumineux (38) réalisé comme élément de l'unité de soupape (2a, 2b), menant les signaux de lumière de la source de lumière (37) à partir d'une zone d'entrée de lumière (42) à une zone d'affichage (43) sur le côté extérieur de l'unité de soupape (2a, 2b), dans lequel la source de lumière (37) est agencée séparément par rapport à l'unité de soupape (2a, 2b) et est réalisée comme élément de la partie d'injection (25), dans lequel elle est placée sur la partie d'injection (25) de telle manière qu'elle occupe, en cas de partie d'injection (25) raccordée au dispositif d'interface (16) électrique de l'unité de soupape (2a, 2b), une position près de la zone d'entrée de lumière (42) du conducteur lumineux (38), **caractérisé en ce que** l'au moins une unité de soupape (2a, 2b) est montée comme un composant autonome sur un support de soupape (3a, 3b) contenant le dispositif de transmission de signal électrique interne (27) et appartenant à l'appareil de soupape, sur lequel plusieurs unités de soupape (2a, 2b) sont montées côte à côte l'une à côté de l'autre, auxquelles respectivement au moins un dispositif d'affichage d'état (36) est associé.

2. Appareil à soupape selon la revendication 1, **caractérisé en ce que** la partie d'injection (25) présente une platine pourvue de conducteurs électriques (28) et portant la source de lumière (37).

3. Appareil à soupape pour la commande de courants fluides, avec au moins une unité de soupape (2a, 2b) présentant un dispositif d'entraînement (12) électrique, sur laquelle un dispositif d'interface (16) électrique est présent pour l'injection des signaux d'actionnement électriques destinés au dispositif d'entraînement (12), avec une partie d'injection (25) pouvant être raccordée ou raccordée de manière détachable à ce dispositif d'interface (16) électrique, acheminant les signaux d'actionnement électriques, et avec au moins un dispositif d'affichage d'état (36) optoélectrique associé à l'unité de soupape (2a, 2b), qui contient une source de lumière (37) et un conducteur lumineux (38) réalisé comme élément de l'unité de soupape (2a, 2b), acheminant les signaux de lumière de la source de lumière (37) à partir d'une zone d'entrée de lumière (42) à une zone d'affichage (43) sur le côté extérieur de l'unité de soupape (2a, 2b), dans lequel la source de lumière (37) est agencée séparément par rapport à l'unité de soupape (2a, 2b) et est réalisée comme élément de la partie d'injection (25), dans lequel elle est placée sur la partie d'injection (25) de telle manière qu'elle occupe, en cas de partie d'injection (25) raccordée au dispositif d'interface (16) électrique de l'unité de soupape (2a, 2b), une position près de la zone d'entrée de lumière (42) du conducteur lumineux (38), **caractérisé en ce que** la partie d'injection (25) est une fiche de raccordement de soupape (34) individuelle agencée sur un câble (33).

4. Appareil à soupape selon la revendication 3, **caractérisé en ce que** l'au moins une unité de soupape (2b) est montée comme un composant autonome sur un support de soupape (3b), dans lequel le dispositif d'interface (16) électrique est agencé sur l'unité de soupape (2b) de sorte qu'il ne soit pas recouvert par le support de soupape (3b) et reste aussi accessible en cas d'unité de soupape (2b) montée sur le support de soupape (3b) pour le raccordement et le retrait de la fiche de raccordement de soupape (34).

5. Appareil à soupape selon la revendication 3 ou 4, **caractérisé par** un support de soupape (3a, 3b), sur lequel plusieurs unités de soupape (2a, 2b) sont montées côte à côte l'une à côté de l'autre, auxquelles est associé respectivement au moins un dispositif d'affichage d'état (36).

6. Appareil à soupape selon l'une des revendications 1 à 5, **caractérisé en ce que** la partie d'injection (25) est réalisée pour la liaison par enfichage détachable avec le dispositif d'interface électrique (16).

7. Appareil à soupape selon l'une des revendications 1 à 6, **caractérisé en ce que** le dispositif d'interface (16) électrique est agencé sur le dispositif d'entraînement électrique (12) de l'unité de soupape (2a, 2b).

8. Appareil à soupape selon l'une des revendications 1 à 7, **caractérisé en ce que** le dispositif d'entraînement (12) électrique est un élément d'au moins une soupape de précommande actionnable électrique de l'unité de soupape (2a, 2b).

9. Appareil à soupape selon l'une des revendications 1 à 8, **caractérisé en ce que** la source de lumière (37) est formée par une diode électroluminescente.
